# EUROPÄISCHE PATENTSCHRIFT

(11) **EP 2 513 498 B1**
(45) Veröffentlichungstag und Bekanntmachung des Hinweises auf die Patenterteilung: **05.12.2018**
(21) Anmeldenummer: 10800693.3
(22) Anmeldetag: 01.12.2010
(51) Int. Cl.: F16B 13/14

(54) **ANKERHÜLSE**
ANCHOR SLEEVE
DOUILLE D'ANCRAGE

(30) Priorität: 18.12.2009 DE 102009059209
(43) Veröffentlichungstag der Anmeldung: 24.10.2012
(73) Patentinhaber: fischerwerke GmbH & Co. KG, 72178 Waldachtal (DE)
(72) Erfinder: GRÜN, Jürgen, 79268 Bötzingen (DE); STEURER, Paul, 79331 Teningen (DE); SCHNABEL, Rudolf, 79336 Herbolzheim (DE)
(86) Internationale Anmeldenummer: PCT/EP2010/007267
(87) Internationale Veröffentlichungsnummer: WO 2011/072802

(56) Entgegenhaltungen:
- EP-A1- 0 287 505
- EP-A1- 0 770 785
- WO-A1-2005/121453
- DE-A1- 2 527 773
- DE-A1- 3 320 429
- DE-A1- 4 341 529
- DE-A1- 19 720 579
- DE-B1- 2 423 433
- DE-U- 7 518 335
- DE-U1- 20 218 372
- GB-A- 1 448 760

## Beschreibung

Die Erfindung betrifft eine Befestigungsanordnung mit den Merkmalen des Oberbegriffs des Anspruchs 1. Der Ankergrund ist beispielsweise eine gemauerte oder betonierte Wand, Decke, Träger, Unterzug oder dgl. eines Bauwerks. Das Loch kann beispielsweise gebohrt, also ein Bohrloch, oder beim Gießen von Beton durch einen entsprechenden Kern oder dgl. hergestellt sein. Die aushärtende Masse kann ein Klebstoff, Harz oder Mörtel sein, wobei bei Mörtel außer Zementmörtel insbesondere Kunstharzmörtel in Betracht kommen. Die aushärtende Masse kann eine oder mehrere Komponenten aufweisen. Die Aufzählung ist nicht abschließend. Nach dem Aushärten wird die aushärtende Masse auch als ausgehärtete Masse bezeichnet. Die Ankerstange kann beispielsweise eine Gewindestange oder ein DYWIDAG-Stab sein. Auch diese Aufzählung ist nicht abschließend. Eine spezielle Ankerstange mit einer Anzahl axial hintereinander angeordneter, miteinander einstückiger Konen als Spreizkörper ist zwar an sich nicht vorgesehen, allerdings auch nicht ausgeschlossen. Genau genommen handelt es sich bei den Konen um Kegelstümpfe. Die Befestigung einer Ankerstange mit einer aushärtenden Masse in einem Loch in einem Ankergrund wird auch als chemische Verankerung bezeichnet.

Die Offenlegungsschrift DE 38 31 683 A1 offenbart eine Ankerstange mit einer Anzahl axial hintereinander angeordneter Konen als Spreizkörper, an deren letzten sich ein glattwandiger Schaft und daran ein Gewindeabschnitt anschließt. Auf der Ankerstange ist eine Spreizhülse angeordnet, aus der der Gewindeabschnitt vorsteht. Im Bereich der Konen weist die Spreizhülse komplementäre Hohlkonen auf, so dass bei einer Axialverschiebung der Ankerstange in der Spreizhülse die Ankerstange die Spreizhülse aufspreizt. Zu ihrer Aufspreizbarkeit weist die Spreizhülse Längsschlitze auf. Weitet sich das Loch, in dem die Spreizhülse verankert ist, beispielsweise in Folge einer Rissbildung im Ankergrund auf, verschiebt sich die Ankerstange, wenn sie auf Zug beansprucht ist, in der Ankerhülse und spreizt sie weiter auf. Das weitere Aufspreizen einer Spreizhülse bei einer Lochaufweitung wird auch als "Nachspreizen" bezeichnet. Für einen brüchigen Ankergrund schlägt die Offenlegungsschrift ein im Durchmesser größeres Loch vor, in welchem die Spreizhülse mit einer Verbundmasse oder einem Klebemörtel befestigt wird.

Die internationale Patentanmeldung WO 2005/124163 A1 offenbart eine Gewindestange als Ankerstange, die in einer Ankerhülse angeordnet ist. Die Ankerhülse ist gelocht, die Löcher bilden Durchtrittsöffnungen für einen Mörtel. Die Ankerhülse hat den Zweck, den Mörtel in Hohlräumen im Ankergrund im Bereich der Ankerstange zu halten und einem Verlust des Mörtels in die Hohlräume entgegenzuwirken, damit ausreichend Mörtel zur Befestigung der Ankerstange im Ankergrund außerhalb der Hohlräume verbleibt. Ankergründe mit Hohlräumen sind beispielsweise Lochziegel und Hohllochsteine.

Aufgabe der Erfindung ist, eine kostengünstige Ankerhülse für eine Befestigung einer Ankerstange mit einer aushärtenden Masse in einem Loch in einem Ankergrund vorzuschlagen, die ein Nachspreizverhalten aufweist.

Diese Aufgabe wird erfindungsgemäß durch die Merkmale von Anspruch 1 gelöst. Wird die Ankerstange axial belastet, so überträgt sich die Belastung auf die Ankerhülse, deren mindestens eine Spreizfläche einen Spreizdruck auf die aushärtende Masse ausübt, die inzwischen ausgehärtet ist und die Ankerhülse im Loch befestigt. Der Spreizdruck ist eine nach außen gerichtete Kraft, die die mindestens eine Spreizfläche der Ankerhülse bei einer Axialbeanspruchung auf die ausgehärtete Masse ausübt. Die ausgehärtete Masse ist die aushärtende Masse nach dem Aushärten. Bei einer Lochaufweitung weitet der Spreizdruck die ausgehärtete Masse auf, so dass die Ankerstange im Ankergrund befestigt, d.h. verankert bleibt. Die Ankerhülse bewirkt ein Nachspreizen, so dass die Ankerstange bei einer Lochaufweitung im Loch befestigt bleibt.

Die Ankerhülse ist aufspreizbar. Es ist möglich, dass die Ankerstange bei einer Axialbeanspruchung die Ankerhülse aufspreizt, also ein Nachspreizverhalten bewirkt. Vorgesehen ist allerdings an sich, dass sich bei einer Axialbeanspruchung nicht die Ankerstange in der Ankerhülse bewegt, sondern über die Ankerhülse einen Spreizdruck auf die sie umgebende, ausgehärtete Masse ausübt und dadurch nachspreizt. Durch die Ankerhülse bekommt sozusagen eine Ankerstange, beispielsweise eine Gewindestange, die an sich kein Nachspreizverhalten aufweist, im Zusammenwirken mit der Ankerhülse und der sie umgebenden, ausgehärteten Masse ein Nachspreizverhalten.

Die Ankerhülse ist vorzugsweise länglich, das heißt ihre Länge entspricht mindestens dem zweifachen, insbesondere mindestens dem dreifachen des größten Außendurchmessers, wobei der Querschnitt nicht kreisförmig sein muss. Ist er nicht kreisförmig, ist mit dem Durchmesser der Durchmesser eines den Querschnitt umschreibenden Kreises gemeint. Insbesondere weist die Ankerhülse eine Länge auf, die dem 4- bis 20-fachen des kleinsten Innendurchmessers entspricht.

Ein Vorteil der Erfindung ist die preisgünstige Herstellung, weil die Ankerhülse nicht auf der Innenseite, sondern auf der Außenseite mit einer Spreizfläche versehen werden muss. Eine spezielle Ankerstange beispielsweise mit axial hintereinander angeordneten Spreizkonen ist entbehrlich.

Durch jede nach außen verlaufende Spreizfläche wird ein kleinster Außendurchmesser d und ein größter Außendurchmesser D definiert, der die Spreizfläche am jeweiligen Ende umschreibt. Vorzugsweise liegt das Verhältnis D/d zwischen 1,1 und 2,5. Um insbesondere eine möglichst stabile Ankerstange bei möglichst kleinem Lochdurchmesser befestigen zu können, liegt das Verhältnis vorzugsweise bei 1,2 bis 1,4.

Erfindungsgemäß weist die Ankerhülse mehrere umlaufende Spreizflächen auf, wobei die Spreizfläche auch wendelförmig umlaufen kann.
Die Ankerhülse kann beispielsweise ein umlaufendes Sägezahnprofil, sozusagen also Spreizkonen aufweisen, auch eine dreiecksförmige Profilierung mit einander entgegengesetzten Konen ist möglich. Eine Ausgestaltung der Erfindung sieht eine umlaufende Wellung vor, wobei die in einer Längsrichtung der Ankerhülse ansteigenden Flanken der Wellung die umlaufenden Spreizflächen bilden. Die Wellung kann, wie bereits erwähnt, auch wendelförmig umlaufen. Wesentlich für die Erfindung ist eine Formgebung der Ankerhülse mit in der einen Längsrichtung ansteigenden Bereichen, die die Spreizflächen bilden, die bei einer Axialbeanspruchung der Ankerhülse den nach außen gerichteten Spreizdruck auf die ausgehärtete Masse bewirken, die die Ankerhülse im Loch im Ankergrund umgibt.

Erfindungsgemäß weist die Ankerhülse mehrere Spreizflächen auf, die in Längsrichtung der Ankerhülse hintereinander angeordnet sind. Die Spreizflächen können in Längsrichtung und ggf. auch in Umfangsrichtung gleichmäßig oder ungleichmäßig auf der Ankerhülse verteilt angeordnet sein. In bevorzugter Ausgestaltung sind die Spreizflächen über im Wesentlichen die gesamte Länge der Ankerhülse verteilt, so dass sich eine erste Spreizfläche an einem Ende und/oder eine letzte Spreizfläche an dem anderen Ende der Ankerhülse befindet. Sind die Spreizflächen durch eine Profilierung der Ankerhülse, beispielsweise das bereits genannte Sägezahnprofil, Dreiecksprofil oder die Wellung, gebildet, erstreckt sich die Profilierung von einem zum anderen Ende über die gesamte Länge der Ankerhülse.

Erfindungsgemäß ist die Ankerhülse insofern symmetrisch ausgebildet, als sie Spreizflächen aufweist, die einander entgegengerichtet sind. Bei einer Axialbeanspruchung in einer Längsrichtung der Ankerhülse wirken die einen in einer Längsrichtung ansteigenden Spreizflächen aufspreizend auf die umgebende, ausgehärtete Masse, bei einer Axialbeanspruchung in entgegengesetzter Richtung wirken die anderen Spreizflächen aufspreizend. Diese Ausgestaltung der Erfindung hat den Vorteil, dass die Ankerhülse mit ihrem einen oder ihrem anderen Ende voraus in das Loch eingebracht werden kann, ein falsches Einbringen der Ankerhülse in das Loch ist ausgeschlossen. Eine tatsächliche Symmetrie ist zwar vorgesehen, jedoch nicht zwingend; die in der einen Richtung ansteigenden Spreizflächen müssen in Form und Größe nicht mit den in der anderen Richtung ansteigenden Spreizflächen übereinstimmen. Beispielsweise die bereits genannte, dreiecksförmige Profilierung oder die Wellung der Ankerhülse bilden entgegengesetzt ansteigende Spreizflächen.

Die Erfindung sieht mindestens eine Durchtrittsöffnung der Ankerhülse für die aushärtende Masse vor. Wird die Ankerstange nach der aushärtenden Masse in die Ankerhülse eingebracht, verdrängt sie die aushärtende Masse durch die Durchtrittsöffnungen, wodurch eine gute Befüllung sowohl des Zwischenraums zwischen der Ankerhülse und der Ankerstange als auch des Zwischenraums zwischen der Ankerhülse und einer Lochwand erzielt wird. Auch kann umgekehrt die aushärtende Masse von außen durch die Durchtrittsöffnungen in die Ankerhülse eindringen. Die Ankerhülse kann beispielsweise aus einem Lochblech oder einem Streckmetall hergestellt sein, dessen Löcher die Durchtrittsöffnungen für die aushärtende Masse bilden. Auch kann die Ankerhülse aus einem Blech hergestellt sein, das zur Ankerhülse gebogen ist. Der Längsschlitz der Ankerhülse bildet die erste Durchtrittsöffnung für die aushärtende Masse. Außer seiner Funktion als Durchtrittsöffnung für die aushärtende Masse hat ein Längsschlitz den Vorteil, dass er ein radiales Aufweiten und Verengen der Ankerhülse ermöglicht oder erleichtet. Dadurch sind sowohl ein Aufspreizen der Ankerhülse bei einer Axialbeanspruchung der Ankerstange als auch ein Verengen zum Einbringen der Ankerhülse in das Loch im Ankergrund erleichtert, wenn die Ankerhülse in unverformtem Zustand einen größeren Durchmesser als das Loch aufweist, um im Loch vor dem Einbringen oder dem Aushärten der aushärtenden Masse durch Klemmen zu halten. Der Längsschlitz ist nicht auf eine Ankerhülse aus Blech beschränkt, er kann auch an einer Ankerhülse aus einem anderen Material, beispielsweise aus Kunststoff, vorhanden sein. Der Längsschlitz kann durchgehend oder unterbrochen oder an einem oder beiden Enden geschlossen sein. Es können auch mehrere in Umfangsrichtung versetzte Längsschlitze vorhanden sein. Unter einem Längsschlitz ist auch ein solcher Schlitz zu verstehen, der sich in einem Winkel zur Längsrichtung, also beispielsweise wendelförmig oder wellenförmig verläuft. Der Winkel des Längsschlitz zur Längsrichtung der Ankerhülse kann sich über die Länge des Schlitzes ändern.

Ein Reinigungselement kann an einem in der Einbringrichtung der Ankerhülse in das Loch vorderen Ende der Ankerhülse angebracht werden, die beim Einbringen der Ankerhülse in das Loch an einer Lochwand entlangstreift. Das Reinigungselement dient einer Reinigung der Lochwand, um die Haftung der aushärtenden Masse zu verbessern. Das Reinigungselement kann eine Art Bürste oder Schaber sein. Beispielsweise kann auch der vordere Rand der Ankerhülse nach außen stehende Laschen als Reinigungselement aufweisen.

Vorzugsweise ist das Reinigungselement vom vorderen Ende der Ankerhülse lösbar, beispielsweise ist das Reinigungselement auf das vordere Ende der Ankerhülse aufgesetzt. Es lässt sich durch Durchstoßen der Ankerstange durch die Ankerhülse von der Ankerhülse lösen. Vorzugsweise weist das Reinigungselement ein Sackloch oder dgl. Aufnahme für die Ankerstange auf, so dass das Reinigungselement mit der Ankerstange bis zu einem Lochgrund oder jedenfalls tiefer in das Loch geschoben werden kann, als die Ankerhülse lang ist, um die Lochwand zu reinigen. Es ist kein fester Halt des Reinigungselements auf der Ankerstange notwendig.

Eine Ausgestaltung der Erfindung sieht eine Einformung der Ankerhülse nach innen vor, die in Eingriff mit der Ankerstange steht bzw. gelangt, wenn die Ankerstange in die Ankerhülse gesteckt wird bzw. gesteckt ist. Die Einformung kann beispielsweise eine oder können mehrere, von der Ankerhülse nach innen stehende Sicken sein, die vergleichbar mit Zähnen oder dgl. in beispielsweise ein Gewinde der Ankerstange eingreifen, um die Ankerhülse in Längsrichtung auf der Ankerstange und umgekehrt die Ankerstange in der Ankerhülse zu halten. Ein Halt der Ankerhülse in Längsrichtung auf der Ankerstange kann erforderlich oder zumindest vorteilhaft sein, um die Ankerhülse mit der Ankerstange in das Loch einbringen zu können, wenn die Ankerhülse einen größeren Außendurchmesser aufweist als der Durchmesser des Lochs und die Ankerhülse dadurch im Loch klemmt. Bei einer Überkopfmontage hält die Ankerhülse die Ankerstange im Loch, wenn die Ankerhülse klemmend im Loch und die Ankerstange in der Ankerhülse hält. Auch kann sich die Ankerhülse in unverformtem Zustand in Richtung ihres einen Endes verjüngen, so dass sie am verjüngten Ende einen kleineren (kleinsten) Innendurchmesser als die Ankerstange aufweist und auf der Ankerstange in Längsrichtung gehalten ist.

Die erfindungsgemäße Befestigungsanordnung ist insbesondere auch für einen gerissenen Ankergrund bzw. zur Befestigung der Ankerstange in einem Ankergrund mit der Möglichkeit einer Rissbildung vorgesehen. Ein solcher, in das Loch mündender Riss führt bei einer Zugbeanspruchung des Ankergrunds quer zum Loch und quer zum Riss zu einer Öffnung des Riss und einer Aufweitung des Lochs. Aufgrund des erläuterten Nachspreizverhaltens weist die erfindungsgemäße Befestigungsanordnung auch in einem sich aufweitenden Loch einen guten Halt auf. Sie ist nicht nur chemisch im Loch verankert, sondern die ausgehärtete Masse wird bei einer Axialbeanspruchung der Ankerstange von den Spreizflächen der Ankerhülse aufgeweitet und dadurch nach außen gegen die Lochwand gedrückt. Der in das Loch mündende Riss kann das Bohrloch durchsetzen, es können auch mehrere Risse in das Bohrloch münden.

Einem Verfahren zur Herstellung der Befestigungsanordnung zufolge werden die Ankerstange in die Ankerhülse und die Ankerhülse in das Loch im Ankergrund eingebracht und die aushärtende Masse in die Ankerhülse und/oder in das Loch eingebracht, wobei die Reihenfolge nicht vorgegeben ist und abweichen kann. Eine Ausgestaltung des erfindungsgemäßen Verfahrens sieht vor, dass das Loch tiefer als die Ankerhülse lang ist, beispielsweise ist das Loch etwa doppelt so tief wie die Ankerhülse lang ist. Die Ankerstange wird durch die Ankerhülse durchgesteckt und steht aus dem in der Einbringrichtung der Ankerhülse in das Loch vorderen Ende aus der Ankerhülse vor, wobei der Vorstand der Ankerstange aus dem vorderen Ende der Ankerhülse nicht größer als das Bohrloch tiefer als die Ankerhülse lang ist. Beim Einbringen der Ankerstange in das Loch verdrängt die Ankerstange die zuvor in das Loch eingebrachte aushärtende Masse nach Art eines Kolbens, so dass die aushärtende Masse entgegen der Einbringrichtung der Ankerstange in einem Spalt im Loch um die Ankerstange herum zurück in Richtung einer Lochmündung fließt. Sofern ein Zwischenraum zwischen der Ankerhülse und der Ankerstange nicht mit der aushärtenden Masse gefüllt ist, dringt die aushärtende Masse auch in die Ankerhülse ein und füllt den Zwischenraum zwischen der Ankerhülse und der Ankerstange aus. Mit dieser Ausgestaltung des erfindungsgemäßen Verfahrens wird eine gute Verfüllung des Spalts zwischen der Ankerhülse und der Ankerstange und des Spalts zwischen dem Loch und der Ankerhülse und der Ankerstange mit der aushärtenden Masse erreicht. Es kann die Ankerhülse in das Loch eingebracht und anschließend die Ankerstange durchgesteckt werden oder es wird die Ankerstange durch die Ankerhülse durchgesteckt und anschließend die Ankerstange mit der Ankerhülse in das Loch eingebracht. Vor dem Durchstecken der Ankerstange durch die Ankerhülse kann aushärtende Masse in die Ankerhülse eingebracht werden.

Die Erfindung wird nachfolgend anhand in der Zeichnung dargestellten Ausführungsbeispiele näher erläutert. Es zeigen:
- Figuren 1 und 2: Achsschnitte zweier Befestigungsanordnungen mit Ankerhülsen gemäß der Erfindung; und
- Figuren 3 bis 5: verschiedene Ausgestaltungen an einem Ende der Ankerhülse

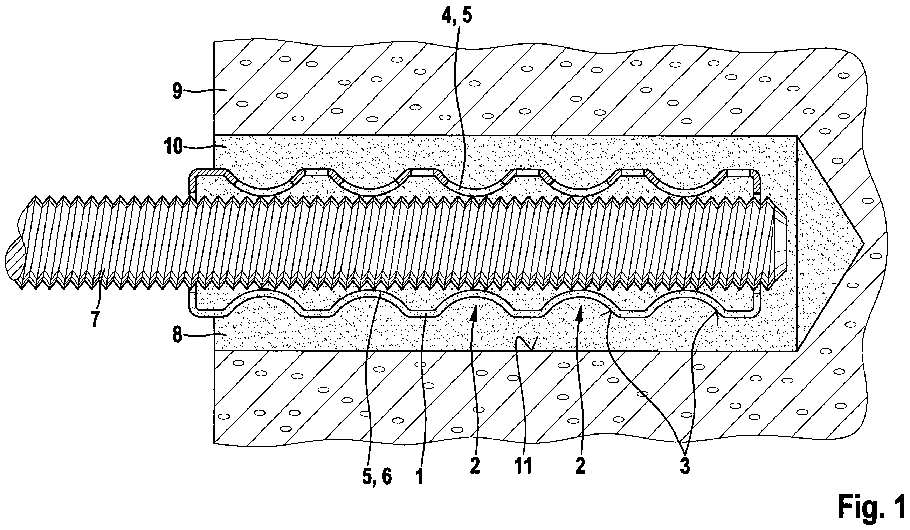

Die in Figur 1 dargestellte Ankerhülse 1 ist aus einem Lochblech hergestellt, das zu einer Hülse, der Ankerhülse 1, gebogen ist. Die Ankerhülse 1 weist eine Anzahl umlaufender Wellungen 2 auf. In einer Längsrichtung der Ankerhülse 1 gesehen weisen die Wellungen 2 ansteigende und abfallende Flanken auf. An den ansteigenden Flanken vergrößert sich ein Abstand einer Wand der Ankerhülse 1 von ihrer Längs-Mittel-Achse, die ansteigenden Flanken der Wellungen 2 der Ankerhülse 1 bilden umlaufende Spreizflächen 3. Löcher 4 des Lochblechs, aus dem die Ankerhülse 1 hergestellt ist, bilden Durchtrittsöffnungen 5 für eine aushärtende Masse 10. Durch das Biegen des Lochblechs zur Ankerhülse 1 weist die Ankerhülse 1 einen durchgehenden Längsschlitz 6 auf, der ebenfalls eine Durchtrittsöffnung 5 für die aushärtende Masse 10 bildet.

Das Verhältnis von größtem Außendurchmesser D zum kleinsten Außendurchmesser d im Bereich der Spreizflächen 3 beträgt 1,37.

In der Ankerhülse 1 ist eine Ankerstange 7 angeordnet. Im Ausführungsbeispiel wird eine Gewindestange als Ankerstange 7 verwendet. Ein Durchmesser der Ankerstange 7 ist kleiner als ein kleinster Innendurchmesser der Ankerhülse 1, so dass die Ankerstange 7 in die Ankerhülse 1 gesteckt bzw. umgekehrt die Ankerhülse 1 auf die Ankerstange 7 geschoben werden kann.

Die Länge der Ankerhülse 1 entspricht etwa dem 4,5-fachen des kleinsten Innendurchmessers und dem 3-fachen des maximalen Außendurchmessers der Ankerhülse 1. Zu einer Befestigung der Ankerstange 7 in einem beispielsweise gebohrten Loch 8 in einem Ankergrund 9 aus beispielsweise Beton wird die Ankerhülse 1 in das Loch 8 eingebracht und es wird die aushärtende Masse 10 in das Loch 8 eingebracht. Die aushärtende Masse 10 kann durch die Ankerhülse 1 hindurch oder vor der Ankerhülse 1 in das Loch 8 eingebracht werden. Zum Einbringen der aushärtenden Masse 10 kann eine nicht dargestellte Injektionsdüse oder ein Statikmischer verwendet werden. Die aushärtende Masse 10 wird vorzugsweise beginnend an einem Grund des Lochs 8 eingebracht. Die Ankerstange 7 wird in die Ankerhülse 1 im Loch 8 gesteckt. Dabei verdrängt die Ankerstange 7 die aushärtende Masse 10, so dass die aushärtende Masse 10 sowohl durch die Durchtrittsöffnungen 5 der Ankerhülse 1 durchtritt, als auch entgegen der Einsteckrichtung der Ankerstange 7 in Richtung einer Mündung des Lochs 8 fließt. Die aushärtende Masse 10 fließt sowohl innerhalb als auch außerhalb der Ankerhülse 1 in Richtung der Mündung des Lochs 8, also sowohl zwischen der Ankerhülse 1 und der Ankerstange 7 als auch zwischen der Ankerhülse 1 und einer Wand 11 des Lochs 8, in Richtung der Mündung des Lochs 8. Zudem wird die aushärtende Masse 10 auch in Richtung des Grundes des Lochs 8 verdrängt. Insgesamt ergibt sich eine gute und vollständige Verfüllung des die Ankerhülse 1 umgebenden Lochs 8 und eines Zwischenraums zwischen der Ankerhülse 1 und der Ankerstange 7. Eine Menge der aushärtenden Masse 10 ist so bemessen, dass sie das Loch 8 und den die Ankerstange 7 umgebenden Innenraum der Ankerhülse 1 vollständig vom Grund bis zur Mündung des Lochs 8 ausfüllt, eine etwaige überschüssige Menge der aushärtenden Masse 10 tritt an der Mündung des Lochs 8 aus dem Loch 8 und/oder aus der Ankerhülse 1 aus. Nach dem Aushärten der Masse 10 ist die Ankerstange 7 im Loch 8 im Ankergrund 9 befestigt, man spricht auch von einer Verankerung bzw. einer chemischen Verankerung der Ankerstange 7 im Ankergrund 9.

Die aushärtende Masse 10 ist beispielsweise ein Mörtel, insbesondere ein Kunstharzmörtel oder ein Hybridmörtel, d.h. eine Mischung eines Zement- und eines Kunstharzmörtels. Die aushärtende Masse 10 bzw. der Mörtel kann eine oder mehrere Komponenten aufweisen. Nach dem Aushärten kann die aushärtende Masse 10 auch als ausgehärtete Masse 10 bezeichnet werden.

Nach dem Aushärten verbindet die aushärtende bzw. ausgehärtete Masse 10 die Ankerhülse 1 mit der Ankerstange 7, eine Axialkraft wird von der Ankerstange 7 auf die Ankerhülse 1 übertragen. Eine vom Ankergrund 9 weg gerichtete Zugbeanspruchung der Ankerstange 7 wird auf die Ankerhülse 1 übertragen. Bei einer solchen Zugbeanspruchung üben die Spreizflächen 3 aufgrund ihres Anstiegs in Längsrichtung der Ankerhülse 1 einen Spreizdruck auf die die Ankerhülse 1 umgebende ausgehärtete Masse 10 aus. Der Spreizdruck ist eine nach außen gerichtete Kraft, die die Spreizflächen 3 der Ankerhülse 1 bei einer Zugbeanspruchung auf die die Ankerhülse 1 umgebende ausgehärtete Masse 10 ausüben. Der Spreizdruck drückt die ausgehärtete Masse 10 nach außen gegen die Wand 11 des Lochs 8, wodurch ein Halt der Ankerhülse 1 und mit ihr zusammen der Ankerstange 7 im Loch 8 im Ankergrund 9 verbessert wird. Bei einer Aufweitung des Lochs 8 beispielsweise in Folge einer Rissbildung im Ankergrund 9 weitet der Spreizdruck, den die Ankerhülse 1 bei einer Zug- bzw. Axialbeanspruchung auf die sie umgebende ausgehärtete Masse 10 ausübt, die ausgehärtete Masse 10 auf, die die Ankerhülse 1 umgebende ausgehärtete Masse 10 wird entsprechend der Lochaufweitung aufgespreizt, so dass die Ankerstange 7 mit der Ankerhülse 1 im Loch 8 im Ankergrund 9 verankert bleibt. Das Aufspreizen der die Ankerhülse 1 umgebenden ausgehärteten Masse 10 bei einer Aufweitung des Lochs 8 wird auch als "Nachspreizen" bezeichnet.

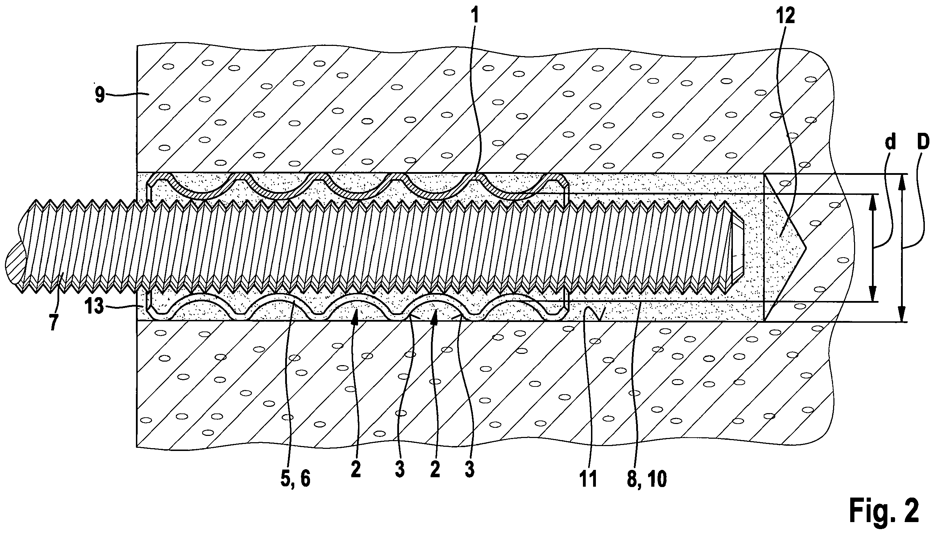

Bei der nachfolgenden Erläuterung der Figuren 2 - 5 werden für mit Figur 1 übereinstimmende Elemente gleiche Bezugszahlen verwendet und es wird ergänzend auf die Erläuterungen der Figur 1 verwiesen.

In Figur 2 weist das Blech, aus dem die Ankerhülse 1 gebogen ist, keine Löcher, sondern nur den Längsschlitz 6 als Durchtrittsöffnung 5 für die aushärtende Masse 10 auf. Wie in Figur 1 weist die Ankerhülse 1 in Figur 2 eine Wellung 2 über ihre gesamte Länge auf, deren Flanken die Spreizflächen 3 bilden. Die Ankerhülse 1 ist symmetrisch, sie weist in einer Richtung gesehen abwechselnd steigende und fallende Flanken auf. Bei einer Axialbeanspruchung der Ankerhülse 1 in einer Richtung bilden die in einer Richtung steigenden Flanken der Wellung 2 die Spreizflächen 3, bei einer Axialbeanspruchung in der entgegengesetzten Richtung bilden die entgegengesetzt steigenden Flanken der Wellung 2 die Spreizflächen 3. Die Ankerhülse 1 kann mit beiden Enden voran in das Loch 8 eingebracht werden. Ein verkehrtes Einbringen der Ankerhülse 1 in das Loch 8 mit dem falschen Ende voran ist ausgeschlossen.

Ihren kleinsten Innendurchmesser weist die Ankerhülse 1 in den Wellentälern auf, d. h. an den Stellen, an denen die Wellung 2 nach innen gerichtet ist. Der kleinste Innendurchmesser der Ankerhülse 1 ist größer als ein Durchmesser der Ankerstange 7, so dass die Ankerstange 7 leicht in die Ankerhülse 1 verschiebbar ist. Der kleinste Innendurchmesser der Ankerhülse 1 kann auch so gewählt sein, dass er jedenfalls dann kleiner als der Durchmesser der Ankerstange 7 ist, wenn die Ankerhülse 1 in das Loch 8 eingebracht und dadurch ggf. zusammengedrückt ist. Man erreicht dadurch eine gewisse Klemmung der Ankerstange 7 in der Ankerhülse 1. Ihren größten Außendurchmesser weist die Ankerhülse 1 an den Wellenbergen auf, also an den Stellen, an denen die Wellung 2 nach außen gerichtet ist. Der größte Durchmesser der Ankerhülse 1 ist, jedenfalls wenn sich die Ankerhülse 1 auf der Ankerstange 7 befindet, größer als ein Durchmesser des Lochs 8, in das die Ankerhülse 1 mit der Ankerstange 7 eingebracht ist. Dadurch hält die Ankerhülse 1 klemmend im Loch 8 im Ankergrund 9 und hält die in ihr klemmende Ankerstange 7, so dass eine Überkopfmontage, d. h. von unten in beispielsweise einer Decke oder einem Träger, problemlos möglich ist. Der Längsschlitz 6 ermöglicht ein Auffedern der Ankerhülse 1 auf den Durchmesser der Ankerstange 7 und ein Zusammenfedern auf den Durchmesser des Lochs 8 im Ankergrund 9.

Zur Befestigung der Ankerstange 7 im Loch 8 im Ankergrund 9 werden die Ankerhülse 1 und die aushärtende Masse 10 in das Loch 8 im Ankergrund 9 eingebracht, wobei vorzugsweise eine abgemessene Menge der aushärtenden Masse 10 im Bereich eines Lochgrunds eingebracht wird. Es kann zuerst die Ankerhülse 1 oder die aushärtende Masse 10 in das Loch 8 eingebracht werden. Es wird die Ankerstange 7 in die Ankerhülse 1 und in das Loch 8 eingebracht. Das Loch 8 ist in Figur 2 ungefähr doppelt so tief wie die Ankerhülse 1 lang ist. Die Ankerhülse 1 ist nahe einer Mündung 13 des Lochs 8 angeordnet. Die Ankerstange 7 verdrängt ähnlich einem Kolben die aushärtende Masse 10, so dass die aushärtende Masse 10 sowohl in Richtung des Lochgrunds 12 verdrängt bzw. verdichtet wird als auch zwischen der Ankerstange 7 und einer Lochwand 11 zurückfließt zur Mündung 13 des Lochs 8. Dabei fließt die aushärtende Masse 10 in die Ankerhülse 1 und außen um sie herum, so dass ein Zwischenraum zwischen der Lochwand 11 und der Ankerstange 7 und der Ankerhülse 1 sowie ein Zwischenraum zwischen der Ankerhülse 1 und der Ankerstange 7 mit der aushärtenden Masse 10 ausgefüllt ist. Es kann auch die Ankerstange 7 mit der auf ihr angeordneten Ankerhülse 1 in das Loch 8 eingebracht werden, wenn der Halt der Ankerhülse 1 in Längsrichtung auf der Ankerstange 7 größer als der Halt der Ankerhülse 1 im Loch 8 ist. Auch in diesem Fall verdrängt die Ankerstange 7 die aushärtende Masse 10 so, dass sie das im Zwischenraum zwischen der Lochwand 11 und der Ankerstange 7 und der Ankerhülse 1 und den Zwischenraum zwischen der Ankerhülse 1 und der Ankerstange 7 ausfüllt.

Nach dem Aushärten der Masse 10, die dann als ausgehärtete Masse 10 bezeichnet werden kann, ist die Ankerstange 7 im Ankergrund 9 befestigt. Die Ankerstange 7 überträgt eine Zug- bzw. Axialbeanspruchung auf die Ankerhülse 1, deren entgegen der Beanspruchungsrichtung schräg nach außen ansteigenden Spreizflächen 3 einen nach außen gerichteten Spreizdruck auf die ausgehärtete Masse 10 ausüben und die Masse nach außen gegen die Lochwand 11 beaufschlagen. Weitet sich das Loch beispielsweise in Folge einer Rissbildung auf, weitet der Spreizdruck der Spreizflächen 3 bei einer Zugbeanspruchung die die Ankerhülse 1 umgebende, ausgehärtete Masse auf, so dass die Ankerhülse 1 und mit ihr die Ankerstange 7 im Ankergrund 9 befestigt bleiben. Eine Ankerkraft, mit der die Ankerstange 7 im Ankergrund 9 hält, ist bis zu einer Rissweite von etwa 0,3 bis 0,5 mm und damit einer Aufweitung des Lochs 8 in einer Querrichtung um die genannten Werte nahezu unverändert.

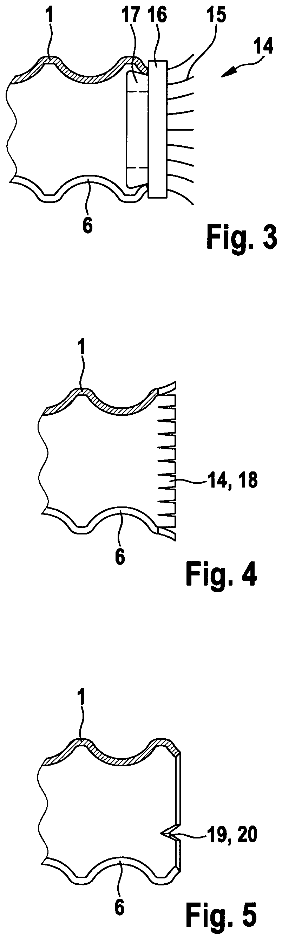

Figur 3 zeigt ein Reinigungselement 14, das in ein Ende der Ankerhülse 1 gesteckt ist. Als Ausführungsbeispiel ist eine Bürste 15 gewählt worden, die ein kreisscheibenförmiges Grundteil 16 aufweist, von dessen einer Stirnseite Borsten abstehen und das auf seiner anderen Seite einen rohrförmigen Ansatz 17 aufweist, dessen Außenseite sich konisch aufweitet, so dass die Bürste 15 in ein Ende der Ankerhülse 1 einclipsbar ist. Borsten der Bürste 15 stehen so nach außen, dass sie beim Einbringen der Ankerhülse 1 in das Loch 8 an der Lochwand 11 entlangstreifen und Bohrmehl und dgl. von der Lochwand 11 abstreifen. Dadurch wird die Lochwand 11 beim Einbringen der Ankerhülse 1 gereinigt.

Beim Durchstecken der Ankerstange 7 gelangt deren vorderes Ende in den rohrförmigen Ansatz 17 der Bürste 15, die das Reinigungselement 14 bildet. Mit der Ankerstange 7 lässt sich die Bürste 15 oder allgemein das Reinigungselement 14 vom Ende der Ankerhülse 1 lösen und bis zum Lochgrund 12 in das Loch 8 schieben, um die Lochwand 11 über die gesamte Tiefe des Lochs 8 zu reinigen.

Das Reinigungselement 14 kann auch auf das Ende der Ankerhülse aus Figur 1 aufgesetzt werden. Die Borsten der Bürste 15 müssen auch in diesem Fall so weit nach außen stehen, dass sie beim Einbringen in das Loch 8 an der Lochwand 11 entlangstreifen und die Lochwand 11 reinigen. Ein Durchmesser des Grundteils 16 kann größer gewählt werden, so dass es nach außen über die Ankerhülse 1 vorsteht.

Eine Bürste 15 ist nicht zwingend für das Reinigungselement 14, denkbar ist beispielsweise auch eine Schleifvliesscheibe oder dass das Grundteil 16 einen dem Loch 8 entsprechenden Durchmesser aufweist und selbst an der Lochwand 11 streift. Ggf. kann das Grundteil 16 Schlitze oder Zähne an seinem Umfangsrand aufweisen (nicht dargestellt).

In Figur 4 ist ein Rand an einem Ende der Ankerhülse 1 mit Schlitzen versehen, so dass einzelne Laschen 18 gebildet sind, die schräg nach außen stehend gebogen sind. Die Laschen 18 stehen soweit nach außen, dass sie beim Einbringen der Ankerhülse 1 in das Loch 8 an der Lochwand 11 entlangstreifen und anhaftendes Bohrmehl oder dgl. abstreifen, d. h. die Lochwand 11 reinigen. Die Laschen 18 bilden das Reingigungselement 14. Sie definieren ein vorderes Ende der Ankerhülse 1, mit dem voran die Ankerhülse 1 in das Loch 8 eingebracht werden muss. Um ein verkehrtes Einbringen der Ankerhülse 1 zu vermeiden, können schräg nach außen stehende Laschen 18 auch an beiden Enden der Ankerhülse 1 ausgebildet sein. Die Laschen 18 haben außer ihrer Reinigungswirkung auch die Wirkung, dass sie die Ankerhülse 1 im Loch 8 halten bzw. den Halt verbessern, bevor die aushärtende Masse 10 eingebracht bzw. ausgehärtet ist.

In Figur 5 weist ein Rand an einem Ende der Ankerhülse eine Einformung 19 in Form einer nach innen stehenden Sicke 20 auf. Es können auch mehrere nach innen stehende Sicken 20 am Rand am Ende der Ankerhülse 1 ausgebildet sein. Die Sicke 20 greift in das Gewinde der Ankerstange 7 ein, wenn die Ankerstange 7 in die Ankerhülse 1 eingebracht ist. Dadurch wird ein guter Halt in Längsrichtung zwischen der Ankerhülse 1 und der Ankerstange 7 erzielt. Möglich ist auch, die Sicke/n 20 an beiden Enden der Ankerhülse 1 oder nach innen gebogene Laschen anstelle der Sicken 20 an einem oder beiden Enden der Ankerhülse 1 vorzusehen, die in das Gewinde der Ankerstange 7 eingreifen und sie in der Ankerhülse 1 halten (nicht dargestellt).

Die Ankerhülse 1 kann sich auch in Richtung ihres einen Endes verjüngen, also an einem Ende einen kleineren Durchmesser als am anderen Ende aufweisen.

### Bezugszeichenliste

### Ankerhülse

- 1: Ankerhülse
- 2: Wellung
- 3: Spreizfläche
- 4: Loch
- 5: Durchtrittsöffnung
- 6: Längsschlitz
- 7: Ankerstange
- 8: Loch
- 9: Ankergrund
- 10: aushärtende Masse
- 11: (Loch-)Wand
- 12: Lochgrund
- 13: Mündung
- 14: Reinigungselement
- 15: Bürste
- 16: Grundteil
- 17: Ansatz
- 18: Lasche
- 19: Einformung
- 20: Sicke
- d: kleinster Außendurchmesser im Bereich der Spreizfläche 3
- D: größter Außendurchmesser im Bereich der Spreizfläche 3

## Patentansprüche

1. Befestigungsanordnung mit einer Ankerstange (7), auf der eine Ankerhülse (1) angeordnet ist, wobei die Ankerstange (7) mit der auf ihr angeordneten Ankerhülse (1) in einem Loch (8) in einem Ankergrund (9) angeordnet ist, und wobei die Ankerstange (7) mit einer ausgehärteten Masse (10) in der Ankerhülse (1) und die Ankerhülse (1) mit der ausgehärteten Masse (10) in dem Loch (8) im Ankergrund (9) befestigt sind, wobei die Ankerstange (7) durch die Ankerhülse (1) durchgesteckt ist, so dass sie aus einem in einer Einbringrichtung der Ankerhülse (1) in das Loch vorderen Ende aus der Ankerhülse (1) vorsteht.
**dadurch gekennzeichnet,**
**dass** die Ankerhülse (1) entgegengesetzt ansteigende Spreizflächen (3) an ihrer Außenseite aufweist, dass sich der Abstand der Spreizflächen (3) von einer Mittel-Längs-Achse der Ankerhülse (1) in Längsrichtung der Ankerhülse (1) vergrößert, und dass die Spreizflächen (3) symmetrisch ausgebildet und einander entgegengerichtet sind, derart, dass sie bei entgegengesetzter Längsbelastung der Ankerhülse (1) wirksam sind, und
**dass** die Ankerhülse (1) einen durchgehenden Längsschlitz (6) aufweist, der eine erste Durchtrittsöffnung (5) bildet und derart gestaltet ist, dass er ein radiales Aufweiten und Verengen der Ankerhülse (1) ermöglicht.

2. Befestigungsanordnung nach Anspruch 1, **dadurch gekennzeichnet, dass** die Ankerhülse (1) mindestens eine zweite Durchtrittsöffnung (4, 6) für die ausgehärtete Masse (10) aufweist.

3. Befestigungsanordnung nach einem der Ansprüche 1 bis 2, **dadurch gekennzeichnet, dass** das Verhältnis von größtem zu kleinstem Außendurchmesser (D, d) der Ankerhülse (1) im Bereich der Spreizfläche (3) 1,1 bis 2,5, insbesondere 1,2 bis 1,4 beträgt.

4. Befestigungsanordnung nach einem der Ansprüche 1 bis 3, **dadurch gekennzeichnet, dass** die Spreizflächen (3) über die gesamte Länge der Ankerhülse (1) verteilt angeordnet sind.

5. Befestigungsanordnung nach Anspruch 4, **dadurch gekennzeichnet, dass** die Ankerhülse (1) eine umlaufende Wellung (2) aufweist, deren in der einen Längsrichtung ansteigende Flanken die Spreizflächen (3) bilden.

6. Befestigungsanordnung nach Anspruch 5, **dadurch gekennzeichnet, dass** sich die Wellung (2) über die gesamte Länge der Ankerhülse (1) erstreckt.

7. Befestigungsanordnung nach einem der Ansprüche 1 bis 6, **dadurch gekennzeichnet, dass** der Ankergrund (9) einen in das Loch (8) mündenden Riss aufweist.

## Claims

1. Fixing arrangement having an anchor rod (7) on which there is arranged an anchor sleeve (1), the anchor rod (7) with the anchor sleeve (1) arranged thereon being arranged in a hole (8) in an anchoring substrate (9), and the anchor rod (7) being fixed in the anchor sleeve (1) with a curable composition (10) and the anchor sleeve (1) being fixed in the hole (8) in the anchoring substrate (9) with the curable composition (10), wherein the anchor rod (7) is pushed through the anchor sleeve (1) so that it projects out of the anchor sleeve (1) at the end that is at the front in the direction of introduction of the anchor sleeve (1) into the hole,
**characterised in that**
the anchor sleeve (1) has expansion surfaces (3) rising in opposite directions on its outer side; the spacing of the expansion surfaces (3) from a longitudinal centre axis of the anchor sleeve (1) increases in the longitudinal direction of the anchor sleeve (1); and the expansion surfaces (3) are symmetrical and act in opposite directions In such a way that they are operative when the anchor sleeve (1) is subjected to load in opposite longitudinal directions; and
the anchor sleeve (1) has a continuous longitudinal slot (6) which forms a first opening (5) and is configured in such a way that it allows radial expansion and contraction of the anchor sleeve (1).

2. Fixing arrangement according to claim 1, **characterised in that** the anchor sleeve (1) has at least one second opening (4, 6) allowing passage of the curable composition (10).

3. Fixing arrangement according to either one of claims 1 and 2, **characterised in that** the ratio of the largest external diameter to the smallest external diameter (D, d) of the anchor sleeve (1) in the region of the expansion surface (3) is from 1.1 to 2.5, especially from 1.2 to 1.4.

4. Fixing arrangement according to any one of claims 1 to 3, **characterised in that** the expansion surfaces (3) are distributed over the entire length of the anchor sleeve (1).

5. Fixing arrangement according to claim 4, **characterised in that** the anchor sleeve (1) has circumferential corrugation (2), the flanks of which that rise in a longitudinal direction form the expansion surfaces (3).

6. Fixing arrangement according to claim 5, **characterised in that** the corrugation (2) extends over the entire length of the anchor sleeve (1).

7. Fixing arrangement according to any one of claims 1 to 6, **characterised in that** the anchoring substrate (9) has a crack running into the hole (8).

## Revendications

1. Dispositif de fixation muni d'une tige d'ancrage (7) sur laquelle une douille d'ancrage (1) est implantée, la tige d'ancrage (7) étant logée, avec la douille d'ancrage (1) qui s'y trouve, dans un trou (8) pratiqué dans une base d'ancrage (9), ladite tige d'ancrage (7) étant fixée dans ladite douille d'ancrage (1) par une masse durcie (10) et ladite douille d'ancrage (1) étant fixée, par ladite masse durcie (10), dans ledit trou (8) pratiqué dans la base d'ancrage (9), la tige d'ancrage (7) étant emboîtée à travers la douille d'ancrage (1) de façon telle qu'elle soit en saillie, au-delà de ladite douille d'ancrage (1), à partir d'une extrémité située à l'avant dans une direction dans laquelle ladite douille d'ancrage (1) est insérée dans le trou,
**caractérisé par le fait**
**que** la douille d'ancrage (1) est pourvue, à sa face extérieure, de surfaces déployables (3) croissant dans des sens opposés ; par le fait que la distance, comprise entre les surfaces déployables (3) et un axe médian longitudinal de la douille d'ancrage (1), augmente dans la direction longitudinale de ladite douille d'ancrage (1) ; par le fait que lesdites surfaces déployables (3) sont de réalisation symétrique et pointent à l'opposé les unes des autres, de telle sorte qu'elles agissent efficacement lorsqu'une contrainte longitudinale est imposée à ladite douille d'ancrage (1) dans une direction opposée ; et par le fait que la douille d'ancrage (1) est dotée d'une fente longitudinale ininterrompue (6) qui forme un premier orifice de passage (5) et est configurée de manière à permettre un élargissement et un rétrécissement radiaux de ladite douille d'ancrage (1).

2. Dispositif de fixation selon la revendication 1, **caractérisé par le fait que** la douille d'ancrage (1) est dotée d'au moins un second orifice de passage (4, 6) dédié à la masse durcie (10).

3. Dispositif de fixation selon l'une des revendications 1 à 2, **caractérisé par le fait que** le rapport, entre les diamètres extérieurs maximal et minimal (D, d) de la douille d'ancrage (1), est de 1,1 à 2,5, notamment de 1,2 à 1,4 dans le région de la surface déployable (3).

4. Dispositif de fixation selon l'une des revendications 1 à 3, **caractérisé par le fait que** les surfaces déployables (3) sont agencées avec répartition sur l'intégralité de la longueur de la douille d'ancrage (1).

5. Dispositif de fixation selon la revendication 4, **caractérisé par le fait que** la douille d'ancrage (1) est munie d'une ondulation circonférentielle (2) dont les flancs, ascendant dans l'une des directions longitudinales, forment les surfaces déployables (3).

6. Dispositif de fixation selon la revendication 5, **caractérisé par le fait que** l'ondulation (2) s'étend sur l'intégralité de la longueur de la douille d'ancrage (1).

7. Dispositif de fixation selon l'une des revendications 1 à 6, **caractérisé par le fait que** la base d'ancrage (9) présente une fissure débouchant dans le trou (8).
